# EUROPEAN PATENT SPECIFICATION

(11) **EP 2 543 020 B1**
(45) Date of publication and mention of the grant of the patent: **23.04.2014**
(21) Application number: 11708762.7
(22) Date of filing: 03.03.2011
(51) Int. Cl.: G06T 7/00

(54) **A DEVICE AND A METHOD FOR IMAGING THE LEFT VENTRICLE OF A HEART**
Vorrichtung und Verfahren zur Bildaufnahme der linken Herzkammer
Dispositif et procédé d'imagerie du ventricule cardiaque gauche

(30) Priority: 04.03.2010 PL 39060910; 26.07.2010 EP 10170752
(43) Date of publication of application: 09.01.2013
(73) Proprietor: Europejskie Centrum Zdrowia Otwock Sp. z o.o., 01-014 Warszawa (PL)
(72) Inventor: KOWNACKI, Lukasz, 05-261 Marki (PL)
(74) Representative: Pawlowski, Adam
(86) International application number: PCT/EP2011/053149
(87) International publication number: WO 2011/107528

(56) References cited:
- WO-A2-03/041584
- US-A1- 2009 149 734
- HELKO LEHMANN ET AL: "Integrating Viability Information into a Cardiac Model for Interventional Guidance", 3 June 2009 (2009-06-03), FUNCTIONAL IMAGING AND MODELING OF THE HEART, SPRINGER BERLIN HEIDELBERG, BERLIN, HEIDELBERG, PAGE(S) 312 - 320, XP019118264, ISBN: 978-3-642-01931-9 cited in the application abstract page 313, line 27 - page 314, line 24
- ALBERT T S E ET AL: "Assessment of no-reflow regions using cardiac MRI", BASIC RESEARCH IN CARDIOLOGY, STEINKOPFF-VERLAG, DA, vol. 101, no. 5, 18 August 2006 (2006-08-18), pages 383-390, XP019425877, ISSN: 1435-1803, DOI: DOI:10.1007/S00395-006-0617-0 cited in the application

## Description

### TECHNICAL FIELD

The object of the invention is a device and a method for imaging the left ventricle of a heart, useful in particular for analysis of acute myocardial infraction by magnetic resonance (MR) tomography.

### BACKGROUND ART

One of the known techniques used for imaging of the heart is cardiovascular magnetic resonance (CMR). A magnetic resonance scanner may capture slice images representing a particular cross-section of a heart, and a series of slice images in different cross-sections may be combined to create a three-dimensional (3D) representation of the heart. The magnetic resonance scanner may also capture cine images, comprising a series of slice images of a particular cross-section of the heart captured during movement of the heart in different heart cycle phases.

Various types of images can be obtained by changing the scanner working parameters, allowing detailed analysis of various pathological conditions of the heart. The images may be analyzed to determine various parameters of structure or activity of the heart.

The US patent application US2006/0241376 describes a method for determining the total left ventricular interior volume from a cardiac cine series, comprising the steps of delineating endocardial and epicardial contours of a left ventricle in all slices of the cine series at the end-diastolic phase (ED), applying the endocardial contours delineated at ED to all phases of the cardiac cycle and calculating the total left ventricular interior volume based on intensity values inside the endocardial contours delineated at the end-diastolic phase. Images of only one type are analyzed in this method.

The US patent application US2009/0149734 describes a diagnostic imaging apparatus, for example a magnetic resonance apparatus, comprising a unit that measures sequential variations in size of a ventricle within at least one heart beat from images of a heart scanned in each of a plurality of time phases. Images of different types may be generated during one examination procedure, but each of the generated image types is used individually to determine different parameters of the heart activity. That method does not involve combining data obtained from images of different types.

The US patent application US20090232369 describes a method for integration of medical diagnostic information and a geometric model of a movable body based on a first dataset comprising shape and motion information about the movable body and a second dataset comprising medical diagnostic information about the movable body. A particular embodiment is directed to integration of cine images with contrast-enhanced images. The method relates only to the technical implementation of combining data of different types of images, but it does not relate to selecting images of particular type to analysis of particular pathological conditions.

The publication "Electroanatomic characterization of post-infarct scars comparison with three-dimensional myocardial scar reconstruction based on magnetic resonance imaging" by A. Codreanu et al (J Am Coll Cardiol. 2008 Sep 2;52(10):839-42.PMID: 18755347) describes processing of delayed contrast enhancement magnetic resonance images, useful for analyzing chronic heart failure.

The publication "Integrating Viability Information into a Cardiac Model for Interventional Guidance" by Helko Lehmann et al. (Functional Imaging and Modeling of the Heart, Springer Berlin Heidelberg, Berlin, Heidelberg, pages 312-320, ISBN: 978-3-642-01931-9) presents a method for generating a cardiac model visualizing a scar tissue. In the method, a whole-heart image representing cardiac surface and a late enhancement image representing the scar tissue are collected and combined into a 3D model. The image obtained is suitable for analyzing post-myocardial infraction states, but not for acute myocardial infraction.

The PCT Application no. WO 03/041584 A2 presents a method for characterizing a vascular system based on two-dimensional slice images combined into a 3D model.

The publication "Assessment of no-reflow regions using cardiac MRI" by Albert T S E et al. (Basic Research in Cardiology, Steinkopff-Verlag, DA, vol. 101, no. 5, 18 August 2006, pages 383-390, ISSN: 1435-1803) presents a method for assessment of no-reflow regions using cardiac magnetic resonance imaging. The assessment is based on delayed enhancement ceMRI images, which are not combined with other types of images.

The known procedures and devices used for diagnosis of the cardiovascular system by magnetic resonance are therefore not suitable for generating images of the left ventricle particularly useful for analysis of early results of acute myocardial infraction.

### DISCLOSURE OF INVENTION

The invention is defined in independent claims 1 and 8.

The aim of the invention is to provide a device and a method for imaging the left ventricle of a heart, useful in particular for analysis of acute myocardial infraction.

The object of the invention is a device for imaging the left ventricle of a heart using images of the left ventricle collected from a magnetic resonance scanner. The device comprises a scanner interface configured to collect from the magnetic resonance scanner input images of different types and an image processor configured to process data of the collected input images. The scanner interface comprises a cine image interface configured to collect input cine images, a black blood image interface configured to collect input black blood images, a contrast enhancement image interface configured to collect input contrast enhancement images. The interfaces are connected to an image capturing controller, configured to transmit the input images captured from the interfaces in the order controlled by a device controller to the image processor. The image processor is configured to generate an output image comprising epicardial and endocardial contours selected from the cine image, an oedema region selected from the black blood image, a damaged cardiomyocytes region selected the contrast enhancement image of one type and a no-reflow region selected from contrast enhancement image of another type.

The image processor may comprise a scaler configured to spatially scale the input images to a size corresponding to a single phase of the cardiac cycle.

The scanner interface may further comprise an interface for collecting other images.

The image processor can be further configured to combine the output image with the image collected from the interface for collecting other images.

The input images and the output image can be two-dimensional images.

The device may further comprise a generator configured to generate a three-dimensional model based on the two-dimensional output images generated for different cross-sections of the left ventricle of the heart.

The input images and the output image can be three-dimensional.

Another object of the invention is a computer-implemented method for imaging the left ventricle of a heart using images of the left ventricle collected from a magnetic resonance scanner, the method comprising the steps of collecting input cine images, collecting input "black blood" images, collecting input contrast enhancement images (501-504, 601-604), processing data of the collected input images (301-304, 401-404, 501-504, 601-604) by selecting epicardial and endocardial contours from the cine image, selecting an oedema region from the "black blood" image, selecting a damaged cardiomyocytes region from the contrast enhancement image, selecting a "no-reflow" region from the contrast enhancement image, generating an output image comprising epicardial and endocardial contours, oedema region, damaged cardiomyocytes region and "no-reflow" region selected from the input images.

The method may further comprise the step of spatially scaling the input images to a size corresponding to one phase of the cardiac cycle.

The method may further comprise the step of collecting other images from the magnetic resonance scanner and combining the output image with the other images.

### BRIEF DESCRIPTION OF DRAWINGS

The object of the invention is shown by means of exemplary embodiment on a drawing, in which:
Fig. 1 shows schematically the structure of a device according to the invention;
Fig. 2 shows a method for processing of the input images,
Fig. 3 shows segments of a cine image,
Fig. 4 shows segments of a "black blood" image,
Fig. 5 shows segments of an early contrast enhancement image,
Fig. 6 shows segments of a delayed contrast enhancement image,
Fig. 7 shows input images and an output image for an individual slice,
Fig. 8 shows a 3D model of the left ventricle with marked regions, which are particularly useful for analysing the early results of acute myocardial infraction.

### MODES FOR CARRYING OUT THE INVENTION

A device for imaging the left ventricle of a heart, according to the invention, processes certain types of input images to generate an output image, having marked epicardial and endocardial contours, oedema regions, regions with damaged cardiomyocytes (indicated by the delayed contrast enhancement imaging) and "no-reflow" regions (indicated by the early enhancement imaging). Preferably, the output image has a form of a 3D model of the left ventricle. The set of data in such configuration, when shown on a single image, allows a quick determination of the range of the acute myocardial infraction related heart damage in the examined person, as well as the early results of treatment, for example by primary coronary intervention (PCI). The acute myocardial infraction is understood as a heart damage which occurred not earlier than a few days before the CMR was performed.

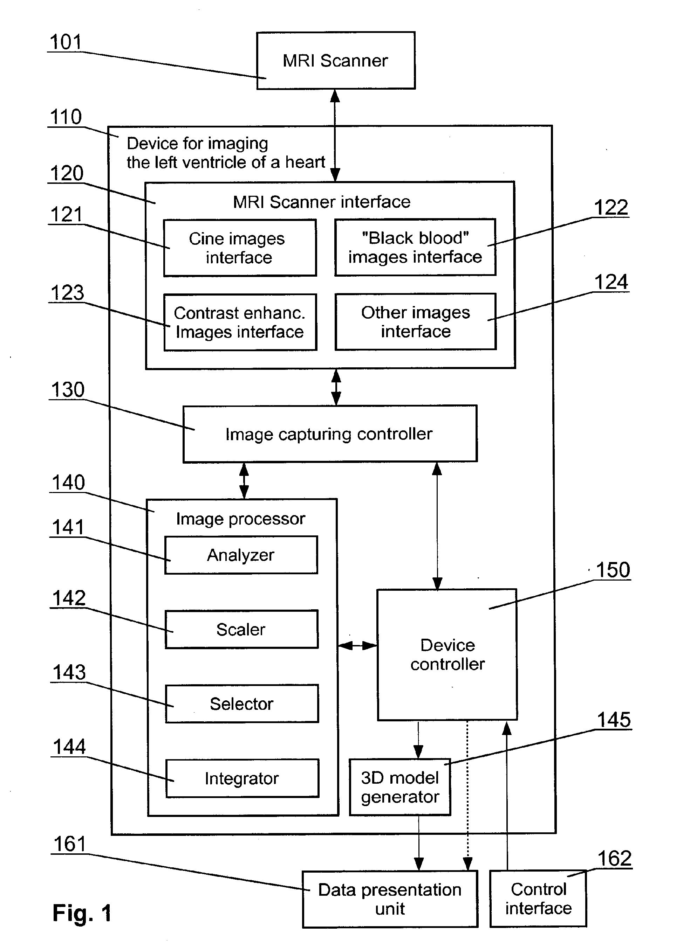

Fig. 1 shows schematically the structure of a device 110 for imaging the left ventricle according to the invention. The device 110 is coupled with an MRI scanner 101, preferably a CMR scanner. The device 110 can be controlled by a control interface 162, which may comprise a keyboard, a pointing device, a touchpad input device, a voice recognition device and/or an automated control interface, such as a control computer. Input data are transmitted to a data presentation unit 161, which may comprise a graphical display, a loudspeaker and/or a data transfer interface for another device, for example a computer for analysing data or a data storage for storing data.

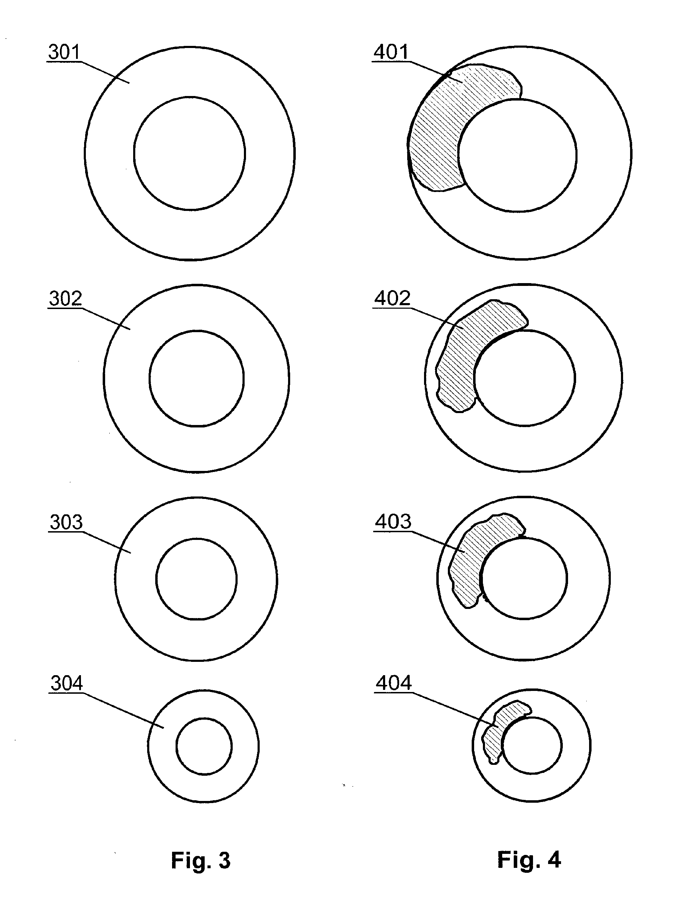

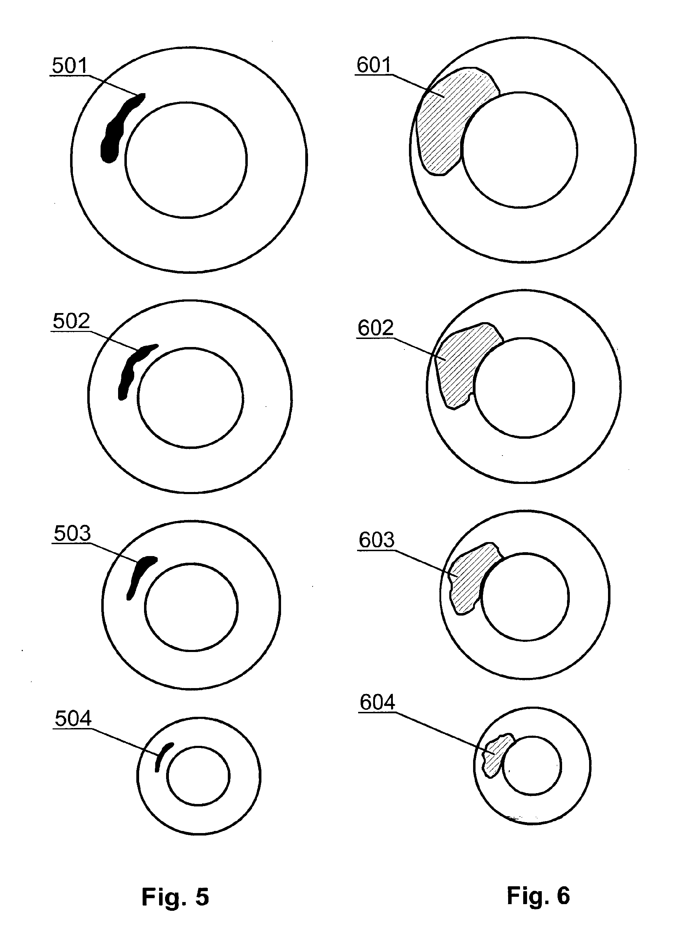

The imaging device 110 comprises an MRI scanner interface 120, configured to collect images of different types from the MRI scanner. Preferably, the interface 120 is configured to collect data from a 3T scanner, providing high image quality and resolution images. In one embodiment, the input images are collected for a plurality of adjacent cross-sections of the left ventricle. The interface 120 may be also configured to collect images from a device other than the MRI scanner, such as a data storage server or a portable data storage device, connected directly or via a network. Images collected from devices other than the MRI scanner are preferably provided in a general standard, such as DICOM. This allows analyzing of data obtained at a distant location. The MRI scanner interface 120 comprises a cine image interface 121 for collecting cine images, on which epicardial and endocardial contours are visible as a cine sequence, showing individual phases of the cardiac cycle, with a frequency resolution of at least 20 phases per cardiac cycle. Exemplary images 301-304 of the cine image sequence indicative of different slices are shown in Fig. 3. The MRI scanner interface 120 further comprises a "black blood" interface 122 for collecting "black blood" images, on which myocardial oedema regions are detectable. Exemplary "black blood" images 401-404 indicative of four different slices are shown in Fig. 4, wherein the images are scaled to the size of the cine images 301-304 shown in Fig. 3. The MRI scanner interface 120 further comprises a contrast enhancement interface 123 for collecting contrast enhancement images, on which heart regions highly enhanced by a contrast agent are detectable. The contrast enhancement interface 123 is configured to collect two image sequences. One contrast enhancement sequence comprises images of early contrast enhancement, collected no later than a few minutes after administrating a contrast agent to the patient. The early contrast enhancement sequence can be used to detect an acutely damaged myocardium region and a "no-reflow" region, indicating impaired microcirculation. Exemplary early contrast enhancement images 501-504 indicative of four different slices are shown in Fig. 5, wherein the images are scaled to the size of the cine images 301-304 shown in Fig. 3. Another contrast enhancement sequence comprises images of delayed contrast enhancement, collected at least after a dozen of minutes after administrating paramagnetic contrast agent to the patient. The delayed contrast enhancement sequence can be used to detect the damaged cardiomyocytes region. Exemplary delayed contrast images 601-604, indicative of four different slices are shown in Fig. 6, wherein the images are scaled to the size of the cine images 301-304 shown in Fig. 3. The MRI scanner interface 120 may further comprise an interface for collecting other images 124, such as high-resolution images of coronary arteries captured by MR coronarography methods.

The order of collecting particular images and transmission of data between device modules are controlled by a device controller 150, which is configurable by the user via a control interface 162.

An image capturing controller 130 is configured to initiate the operation of a particular image interface 121-124 and to read the images collected by the interface 121-124 and transmit them to an image processor 140.

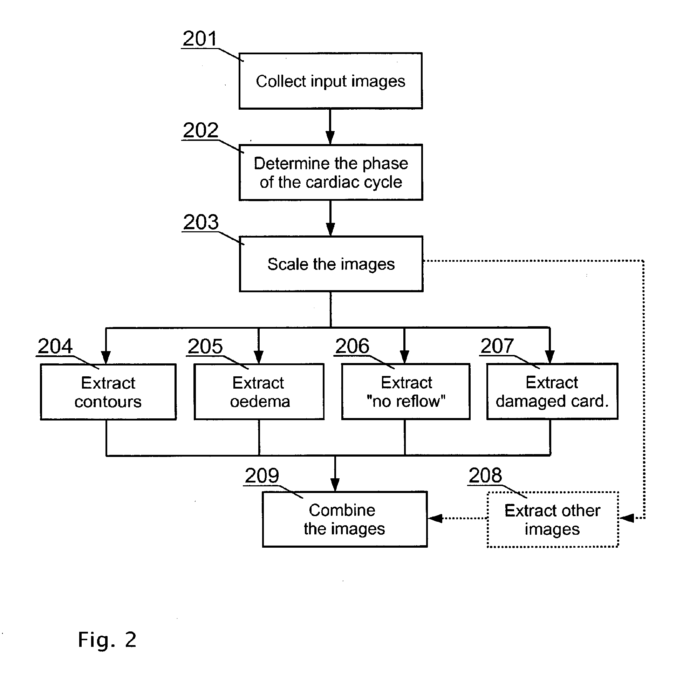

The image processor comprises image processing modules, such as an analyser 141, a scaler 142, a selector 143 and an integrator 144. The operation of individual modules is controlled by a device controller 150 according to the method shown in Fig. 2, such as to appropriately process the input images to generate an output image showing the epicardial and endocardial contours, the oedema region, the damaged cardiomyocytes region and the "no-reflow" region (also called a Microvascular Obstruction (MVO) region). The analyzer 141 is a graphics processing unit configured to analyze images, in particular to detect contours of regions with a particular range of shades. The scaler 142 is a graphics processing unit configured to enlarge or reduce images according to a given scale. The selector 143 is a graphics processing unit configured to collect data from a particular image fragment, for example a fragment delimited by a contour defined by the analyzer 141. The integrator 144 is a graphics processing unit configured to provide a fusion of a plurality of images, by their addition, subtraction and/or diffusion in a defined range. The output images generated by the integrator 144 are transmitted to the device controller 150, from which they can be transmitted to the data presentation unit 161 directly or via a 3D model generator 145, configured to combine images showing individual slices into a 3D model, which is easier to analyze by radiologists and cardiologists.

The modules of the device 110 can be individual, specialized electronic circuits or can be realized as software operating on a dedicated controller and a graphics processor.

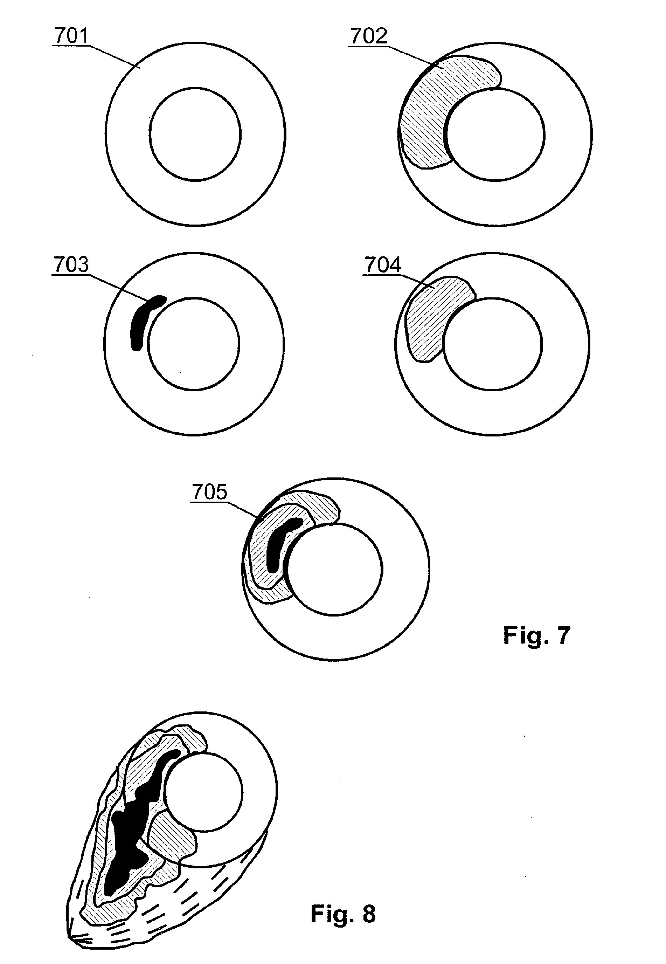

Fig. 2 shows a method for processing the input data, on which the method for imaging of the left ventricle is based. Input image data, i.e. the image sequences of different types, are collected in step 201. In particular, the input cine images (301-304), the input "black blood" images (401-404) and the input contrast enhancement images (501-504, 601-604) are collected. Next, in step 202 the phase of the cardiac cycle, which is going to be imaged, is determined. For example, it can be the end-diastolic phase. The phase is defined by the user by means of a control interface or can be automatically determined as a predetermined phase. Optionally, the method can be repeated for many phases, in order to present a moving image of the left ventricle, for example for all phases for which the cine images are available. In step 203, by means of the scaler 142, the images are scaled to one common size. Images of different types can be captured at different cardiac cycle phases, namely phases which are most optimal for a particular image type, for example depending on the electrocardiogram curve. Therefore, the sizes of the heart slice will differ between different image types. For example, if the "black blood" image is captured in a contraction or a non end-diastolic phase, and the expected imaging phase is the end-diastolic phase, then the scale difference between the cine image for the contraction or the non-end diastolic phase is compared to the cine image of the end-diastolic phase, and next the "black blood" images are scaled according to the determined scale difference, thereby obtaining approximate representation of the "black blood" images for the end-diastolic phase. The early contrast enhancement and the delayed contrast enhancement images are scaled in a similar manner. In the next steps, the desired information is collected from particular image types by determining the contours of particular areas by means of the analyzer, and next selecting the contents of these regions by the selector 143. In step 204 the epicardial and endocardial contours are extracted from the cine image, such as indicated by reference 701 on Fig. 7. In step 205, from the "black blood" image the oedema region is extracted, such as indicated by reference 702 on Fig. 7. In step 206, from the early contrast enhancement image, the "no-reflow" area is extracted, such as indicated by reference 703 in Fig. 7. In step 207, from the delayed contrast enhancement image, a region with damaged cardiomyocytes is extracted, such as indicated by reference 704 in Fig. 7. Next, in step 209, the four extracted images 701-704 are combined by overlaying the images in the following sequence: 701, 702, 704, 703, thereby generating an output image, such as indicated by reference 705 on Fig. 7. Optionally, if the device comprises an interface for collecting other images 124, in step 209 the output image may be combined with other images extracted in step 208.

The method for processing images is preferably carried out with respect to a set of images (301, 401, 501, 601), (302, 402, 502, 602), (303, 403, 503, 603), (304, 404, 504, 604) for each cross-section, for which the images have been extracted. This results in a sequence of output images, which can be used to generate a 3D representation of the left ventricle using the 3D model generator 145. The 3D model, such as shown in Fig. 8, includes diagnostically important information, particularly useful for diagnosis of acute myocardial infarction.

The method for imaging the left ventricle of a heart according to the invention is performed by the modules of the device 110, which can be individual, specialized electronic circuits or can be realized as software operated by a dedicated controller and a graphics processor. Therefore, the method is a computer-implemented method.

The exemplary input images shown in Fig. 7 represent the short axis cross-sections of the left ventricle, but it is also possible to image the left ventricle by long axis cross-sections, or to combine the short axis and the long axis cross-sections in order to obtain a 3D image of a better accuracy.

The input and output images as discussed above comprise a visualization of the left ventricle. They may also comprise additional information, such as the image of the right ventricle or images of coronary arteries, in order to image parameters other than the impact of acute myocardial infraction on the left ventricle.

Although the term "image" has been used in the above description with reference to two-dimensional images, that term may also relate to three-dimensional images. In case the input images are three-dimensional, the generated output image is also three-dimensional.

The "black blood" images can be obtained by means of a Fast Spin Echo/Turbo Spin Echo (FSE/TSE) technique, wherein blood in the ventricles is indicated with a low signal (black) and the cardiac muscle is indicated with a higher signal (grey). Double Inversion Recovery or Triple Inversion Recovery methods can be used to obtain the low blood signal. Preferably, the Black Blood Triple Inverse Recovery method is used, which allows visualising the myocardial oedema induced by acute myocardial infraction. Proton-density (PD) weighted images and spin-spin relaxation (T2) weighted images are collected.

The "no-reflow" regions are microvascular obstruction (MVO) regions visible on top of the damaged cardiac muscle region (damaged by acute myocardial infraction) enhanced with paramagnetic contrast agent. They are visible as regions having very low signal surrounded by the enhanced regions. The "no-reflow" regions are best visible during the first minutes after contrast agent administration (early enhancement). The "no-reflow" images are visible on spin-lattice (T1) relaxation dependent images.

Delayed contrast enhancement is a method for visualising pathological regions of the cardiac muscle after administration of a paramagnetic contrast agent, by means of a sequence creating highly T1-dependant images. The images are obtained after a delay of at least a dozen of minutes after administration of the contrast agent.

The cine images represent moving cross-sections visualising the cardiac cycle on a selected slice. The images can be obtained by a fast gradient echo technique by means of various types of sequences. Preferably, a Steady State Free Precession (SSPP) method is used, which results in a high signal difference between the high-level cardiac blood signal and the low-level cardiac muscle signal.

## Claims

1. A device for imaging the left ventricle of a heart using images of the left ventricle collected from a magnetic resonance scanner, the device comprising:
- a scanner interface (120) configured to collect from the magnetic resonance scanner input images of different types and
- an image processor (140) configured to process data of the collected input images,
wherein
- the scanner interface (120) comprises
- a cine image interface (121) configured to collect input cine images (301-304),
- a black blood image interface (122) configured to collect input black blood images (401-404),
- a contrast enhancement image interface (123) configured to collect input early contrast enhancement images (501-504) and input delayed contrast enhancement images (601-604),
- the interfaces (121-123) being connected to an image capturing controller (130), configured to transmit the input images (301-304, 401-404, 501-504, 601-604) captured from the interfaces (121-123) in the order controlled by a device controller (150) to the image processor (140),
- and wherein the image processor (140) is configured to generate an output image (705) comprising:
o epicardial and endocardial contours (701) selected from the cine images (301-304),
o an oedema region (702) selected from the black blood images (401-404),
o a damaged cardiomyocytes region (704) selected from the delayed contrast enhancement images (601-604) and
o a no-reflow region (703) selected from the early contrast enhancement images (501-504).

2. The device according to claim 1, **characterized in that** the image processor (140) comprises a scaler (142) configured to spatially scale the input images (301-304, 401-404, 501-504, 601-604) to a size corresponding to a single phase of the cardiac cycle.

3. The device according to claim 1, **characterized in that** the scanner interface (120) further comprises an interface for collecting other images (124).

4. The device according to claim 1, **characterized in that** the image processor (140) is further configured to combine the output image (705) with the image collected from the interface for collecting other images (124).

5. The device according to claim 1, **characterized in that** the input images (301-304, 401-404, 501-504, 601-604) and the output image (705) are two-dimensional images.

6. The device according to claim 5, **characterized in that** it further comprises a generator (145) configured to generate a three-dimensional model based on the two-dimensional output images (705) generated for different cross-sections of the left ventricle of the heart.

7. The device according to claim 1, **characterized in that** the input images (301-304, 401-404, 501-504, 601-604) and the output image (705) are three-dimensional.

8. A computer-implemented method for imaging the left ventricle of a heart using images of the left ventricle collected from a magnetic resonance scanner, the method comprising the steps of:
- collecting input cine images (301-304),
- collecting input black blood images (401-404),
- collecting input early contrast enhancement images (501-504) and input delayed contrast enhancement images (601-604),
- processing data of the collected input images (301-304, 401-404, 501-504, 601-604) by
o selecting epicardial and endocardial contours (701) from the cine images (301-304)
o selecting an oedema region (702) from the black blood images (401-404)
o selecting a damaged cardiomyocytes region (704) from the delayed contrast enhancement images (601-604)
o selecting a no-reflow region (703) from the early contrast enhancement images (501-504)
o generating an output image (705) comprising epicardial and endocardial contours (701), oedema region (702), damaged cardiomyocytes region (704) and no-reflow region (703) selected from the input images (301-304, 401-404, 501-504, 601-604).

9. The method according to claim 8, further comprising the step of spatially scaling the input images (301-304, 401-404, 501-504, 601-604) to a size corresponding to a single phase of the cardiac cycle.

10. The method according to any of claims 9, further comprising the step of collecting other images (124) from the magnetic resonance scanner and combining the output image with the other images (124).

## Patentansprüche

1. Vorrichtung zum Abbilden der linken Herzkammer unter Verwendung von Bildern der linken Herzkammer, die durch einen Kernspintomographen gesammelt wurden, wobei die Vorrichtung umfasst:
- eine Abtasterschnittstelle (120), die zum Sammeln von Eingangsbildern verschiedener Arten vom Kernspintomographen konfiguriert ist, und
- einen Bildverarbeiter (140), der zum Verarbeiten von Daten der gesammelten Eingangsbilder konfiguriert ist,
wobei
- die Abtasterschnittstelle (120) umfasst
- eine Cine-Bild-Schnittstelle (121), die zum Sammeln von Eingangs-Cine-Bildern (301-304) konfiguriert ist,
- eine Schwarzblutbildschnittstelle (122), die zum Sammeln von Eingangs-Schwarzblutbildem (401-404) konfiguriert ist,
- eine Kontrastanhebungsbildschnittstelle (123), die zum Sammeln früher Eingabekontrastanhebungsbilder (501-504) und verzögerter Eingabekontrastanhebungsbilder (601-604) konfiguriert ist,
- wobei die Schnittstellen (121-123) an ein Bilderfassungssteuergerät (130) angeschlossen sind, das zum Übertragen der von den Schnittstellen (121-123) erfassten Eingabebilder (301-304, 401-404, 501-504, 601-604), in der von einem Vorrichtungssteuergerät (150) gesteuerten Reihenfolge, an den Bildverarbeiter (140) konfiguriert ist,
- und wobei der Bildverarbeiter (140) zum Erzeugen eines Ausgabebildes (705) konfiguriert ist, umfassend:
- epikardiale und endokardiale Konturen (701), ausgewählt aus den Cine-Bildern (301-304),
- eine Ödemregion (702), ausgewählt aus den Schwarzblutbildern (401-404),
- eine beschädigte Kardiomyozytenregion (704), ausgewählt aus den verzögerten Kontrastanhebungsbildern (601-604) und
eine Kein-Rückfluss-Region (703), ausgewählt aus den frühen Kontrastanhebungsbildern (501-504).

2. Vorrichtung nach Anspruch 1, **dadurch gekennzeichnet, dass** der Bildverarbeiter (140) einen Skalierer (142) umfasst, der zum räumlichen Skalieren der Eingabebilder (301-304, 401-404, 501-504, 601-604) auf eine Größe entsprechend einer einzelnen Phase des Herzkreislaufs konfiguriert ist.

3. Vorrichtung nach Anspruch 1, **dadurch gekennzeichnet, dass** die Abtasterschnittstelle (120) des Weiteren eine Schnittstelle zum Sammeln anderer Bilder (124) umfasst.

4. Vorrichtung nach Anspruch 1, **dadurch gekennzeichnet, dass** der Bildverarbeiter (140) des Weiteren zum Kombinieren des Ausgabebildes (705) mit den Bildern, die von der Schnittstelle zum Sammeln anderer Bilder (124) gesammelt wurden, konfiguriert ist.

5. Vorrichtung nach Anspruch 1, **dadurch gekennzeichnet, dass** die Eingabebilder (301-304, 401-404, 501-504, 601-604) und das Ausgabebild (705) zweidimensionale Bilder sind.

6. Vorrichtung nach Anspruch 5, **dadurch gekennzeichnet, dass** sie des Weiteren einen Erzeuger (145) umfasst, der zum Erzeugen eines dreidimensionalen Modells, basierend auf den, für verschiedene Querschnitte der linken Herzkammer erzeugten, zweidimensionalen Ausgabebildern (705) konfiguriert ist.

7. Vorrichtung nach Anspruch 1, **dadurch gekennzeichnet, dass** die Eingabebilder (301-304, 401-404, 501-504, 601-604) und das Ausgabebild (705) dreidimensional sind.

8. Computerumgesetztes Verfahren zum Abbilden der linken Herzkammer unter Verwendung von Bildern der linken Herzkammer, die durch einen Kernspintomographen gesammelt wurden, wobei das Verfahren die Schritte umfasst:
- Sammeln von Eingabe-Cine-Bildern (301-304),
- Sammeln von Eingabe-Schwarzblutbildern (401-404),
- Sammeln von frühen Eingabekontrastanhebungsbildern (501-504) und verzögerten Eingabekontrastanhebungsbildern (601-604),
- Datenverarbeitung der gesammelten Eingabebilder (301-304, 401-404, 501-504, 601-604) durch
- Auswählen epikardialer und endokardialer Konturen (701) aus den Cine-Bildern (301-304)
- Auswählen einer Ödemregion (702) aus den Schwarzblutbildern (401-404)
- Auswählen einer beschädigten Kardiomyozytenregion (704) aus den verzögerten Kontrastanhebungsbildern (601-604)
- Auswählen einer Kein-Rückfluss-Region (703) aus den frühen Kontrastanhebungsbildern (501-504)
- Erzeugen eines Ausgabebildes (705), das epikardiale und endokardiale Konturen (701), die Ödemregion (702), die beschädigte Kardiomyozytenregion (704) und die Kein-Rückfluss-Region (703) umfasst, ausgewählt aus den Eingabebildern (301-304, 401-404, 501-504, 601-604).

9. Verfahren nach Anspruch 8, des Weiteren umfassend den Schritt des räumlichen Skalierens der Eingabebilder (301-304, 401-404, 501-504, 601-604) auf eine Größe entsprechend einer einzelnen Phase des Herzkreislaufs.

10. Verfahren nach einem der Ansprüche 9, des Weiteren umfassend den Schritt des Sammelns anderer Bilder (124) vom Kernspintomographen und des Kombinierens des Ausgabebildes mit den anderen Bildern (124).

## Revendications

1. Dispositif pour représenter le ventricule gauche d'un coeur en utilisant des images du ventricule gauche collectées à partir d'un scanner à résonance magnétique, le dispositif comprenant :
- une interface de scanner (120) configurée pour recueillir du scanner à résonance magnétique des images d'entrée de différents types et
- un processeur d'image (140) configuré pour traiter les données provenant des images d'entrée recueillies,
dans lequel
- l'interface de scanner (120) comprend
- une interface d'imagerie dynamique (121) configurée pour recueillir les images dynamiques à l'entrée (301-304),
- une interface à sang noir (122) configurée pour recueillir les images de sang noir à l'entrée (401-404),
- une interface d'imagerie à rehaussement de contraste (123) configurée pour recueillir les images à rehaussement de contraste précoces à l'entrée (501-504) et les images à rehaussement de contraste retardées à l'entrée (601-604),
- les interfaces (121-123) étant liées à un contrôleur de capture d'image (130), configuré pour transmettre les images à l'entrée (301-304, 20 401-404, 501-504, 601-604) obtenues à partir des interfaces (121-123) dans un ordre contrôlé par un contrôleur (150) au processeur d'images (140),
- et dans lequel le processeur d'images (140) est configuré pour générer une image de sortie (705) comprenant :
○ des contours épicardiques et endocardiques (701) sélectionnés à partir des images dynamiques (301-304),
○ une zone d'oedème (702) choisie à partir des images de sang noir (401-404),
○ une zone de cardiomyocytes endommagés (704) choisie à partir des images à rehaussement de contraste retardées (601-604) et
○ une zone de non-reflux (703) choisie à partir des images à rehaussement de contraste précoces (501-504).

2. Dispositif selon la revendication 1, **caractérisé en ce que** le processeur d'images (140) comprend un mesureur (142) configuré pour mesurer au niveau spatial les images à l'entrée (301-304, 401-404, 501-504, 601-604) à une taille correspondant à une phase unique du cycle cardiaque.

3. Dispositif selon la revendication 1, **caractérisé en ce que** l'interface du scanner (120) comprend en outre une interface pour recueillir d'autres images (124).

4. Dispositif selon la revendication 1, **caractérisé en ce que** le processeur d'images (140) est en outre configuré pour combiner l'image de sortie (705) avec l'image recueillie de l'interface pour recueillir d'autres images (124).

5. Dispositif selon la revendication 1, **caractérisé en ce que** les images à l'entrée (301-304, 401-404, 501-504, 601-604) et l'image de sortie (705) sont des images bidimensionnelles.

6. Dispositif selon la revendication 5, **caractérisé en ce qu'**il comprend en outre un générateur (145) configuré pour générer un modèle en 3 dimensions sur la base des images de sortie bidimensionnelles (705) générées pour les différentes sections transversales du ventricule gauche du coeur.

7. Dispositif selon la revendication 1, **caractérisé en ce que** les images à l'entrée (301-304, 401-404, 501-504,601-604) et l'image de sortie (705) sont des images en 3 dimensions.

8. Procédé mis en application par un ordinateur pour représenter le ventricule gauche d'un coeur en utilisant des images du ventricule gauche collectées à partir d'un scanner à résonance magnétique, le procédé comprenant les étapes de :
- collecte d'images dynamiques à l'entrée (301-304),
- collecte d'images de sang noir à l'entrée (401-404),
- collecte d'images à rehaussement de contraste précoces à l'entrée (501-504) et d'images à rehaussement de contraste retardées à l'entrée (601-604),
- traitement des données des images d'entrée recueillies (301-304, 401-404, 501504, 601-604) en :
○ sélectionnant des contours épicardiques et endocardiques (701) à partir des images dynamiques (301-304),
○ sélectionnant une zone d'oedème (702) à partir des images de sang noir (401-404),
○ sélectionnant une zone de cardiomyocytes endommagés (704) à partir des images à rehaussement de contraste retardées (601-604) et
○ sélectionnant une zone de non-reflux (703) choisie à partir des images à rehaussement de contraste précoces (501-504).
○ générant une image de sortie (705) comprenant des contours épicardiques et endocardiques (701), une zone d'oedème (702), une zone de cardiomyocytes endommagés (704) et une zone de non-reflux (703) choisies à partir des images d'entrée (301-304, 401-404, 501-504, 601-604).

9. Procédé selon la revendication 8, comprenant en outre l'étape de mesure spatiale des images d'entrée (301-304, 401-404, 501-504, 601-604) à une taille correspondant à une phase unique du cycle cardiaque.

10. Procédé selon l'une quelconque des revendications 9, comprenant en outre l'étape de collecte d'autres images (124) à partir du scanner à résonnance magnétique et de combinaison de l'image de sortie avec les autres images (124).
